# EUROPÄISCHE PATENTSCHRIFT

(11) **EP 1 500 883 B1**
(45) Veröffentlichungstag und Bekanntmachung des Hinweises auf die Patenterteilung: **02.03.2011**
(21) Anmeldenummer: 04017247.0
(22) Anmeldetag: 21.07.2004
(51) Int. Cl.: F24F 3/16, A01G 9/02, F24F 6/04

(54) **Vorrichtung und Verfahren zur Klimatisierung von Innenräumen**
Air conditioning system and method for indoor spaces
Système et procédé de conditionnement d'air d'espaces intérieurs

(30) Priorität: 22.07.2003 DE 10333501
(43) Veröffentlichungstag der Anmeldung: 26.01.2005
(73) Patentinhaber: H & W Bewässerungs GmbH, 84364 Bad Birnbach (DE)
(72) Erfinder: Häring, Bernhard, 84364 Bad Birnbach (DE)
(74) Vertreter: von den Steinen, Axel

(56) Entgegenhaltungen:
- CH-A5- 686 919
- FR-A1- 2 634 971
- GB-A- 2 297 087
- US-A- 5 555 676
- US-A1- 2002 084 346

## Beschreibung

Die Erfindung betrifft eine Vorrichtung zur biologischen Klimatisierung von Innenräumen, wobei die Bezeichnung "Klimatisierung" in allgemeiner Form zu verstehen ist, und sämtliche das Raumklima betreffenden Faktoren umfassen, die die Befindlichkeit der sich im Innenraum aufhaltenden Personen beeinflussen können, wie insbesondere Feuchtigkeitsgehalt, Schadstoff-, Staub- und Keimbelastungs- und Sauerstoffgehalt der Raumluft, und sogar raumakustische Faktoren umfassen können.

Mit den größer werdenden Bürogebäuden zeigen sich bislang kaum bekannte Befindlichkeitsstörungen der darin arbeitenden Menschen. Symptome wie Kopfschmerzen, Unkonzentriertheit, gereizte Augen, allgemeines Unwohlsein und Abgeschlagenheit, häufige grippale Infekte und Erkältungen usw. sind hier anzuführen. Mitunter verlieren betroffene Menschen über längere Zeit, teilweise oder ganz, ihre Leistungsfähigkeit. Der entstehende Volkswirtschaftliche Schaden ist beträchtlich und die gesundheitlichen Auswirkungen auf die betroffenen Menschen erheblich. Dieser Zusammenhang ist seit nunmehr gut 10 Jahren bekannt und wird intensiv beforscht, wobei auf die einschlägigen Ergebnisse von insbesondere aus Norwegen und Holland vorliegenden Langzeitstudien verwiesen wird. Geringe Lichtintensität, Schadstoffemissionen des Mobiliars usw., Staub- und Keimbelastung der Raumluft, ungünstige Raumakustik, hohe CO2-Gehalte der Luft sowie abweisendes Design und an oberster Stelle die trockne Raumluft stellen im Prinzip beeinflussbare Ursachen dar, die bereits bei der Planung von Innenräumen berücksichtigt werden müssen, um die vorstehend genannten Krankheitssymptome zu vermeiden. Von den vielen Faktoren wird eine zu trockene Raumluft als wichtigster Faktor näher betrachtet: Geringe relative Luftfeuchte unter 30 % bedingt höheren Feuchteverlust bei den Menschen und eine elektrostatische Aufladung von Staub. Diese beiden Faktoren bedingen eine Reizung der Atemwege und der Schleimhäute da Staub nicht absinken kann und schwebend in der Raumluft verbleibt und die trockene Luft den Schleimhäuten Feuchtigkeit entzieht. Grippale Infekte und Erkältungskrankheiten sind die folgen, außerdem gereizte Augen bis hin zu Hautentzündungen. Eine wesentliche Ursache für zu trockene Raumluft liegt an der heizungsbedingten Temperaturerhöhung der einströmenden Außenluft. Insbesondere im Winter ist dieser Effekt gegeben. Die in den Raum geführte kalte Frischluft mit geringer absoluter Feuchte erwärmt sich. Dadurch erhöht sich ihre Wasseraufnahmekapazität, wodurch also die relative Luftfeuchte absinkt. Der für den Menschen verträgliche Wert von 30 % relativer Luftfeuchte (gemäß Arbeitsstättenrichtlinie der VBG vom 1.1.1997) wird häufig unterschritten. Der für ein Behaglichkeitsgefühl notwendige Wert von 40 bis 50 % wird nur noch selten erreicht.

Alle derzeit bekannten technischen Maßnahmen zur Luftbefeuchtung haben gravierende Nachteile. Zum einen benötigen die bekannten Luftbefeuchtungsgeräte für den Übergang des flüssigen Wassers in die Gasphase (Verdunstung) erhebliche Wärmeenergie, zum anderen besteht eine meistens 2u wenig beachtete oder bekannte, jedoch erhebliche Gefahr einer Belastung der Raumluft mit gesundheitsschädlichen Keimen und Bakterien. In zentralen Klimaanlagen lagern sich zudem häufig Legionellen an, welche beim Einatmen über Aerosole (feinste atembare Feuchtetröpfchen in der Luft) akut verlaufende Lungenentzündungen verursachen können und daher ein äußerst ernst zunehmendes Gesundheitsrisiko darstellen. Die Keime (Bakterien) besiedeln die feuchten und warmen Bereiche vorbekannter Klimaanlagen und werden auch durch diese mit dem Luftwechsel in die Innenräume gebracht. Das gefährliche und eigentlich tückische an einer derartigen Legionellenbesiedelung ist, dass die Leitungen der Klimaanlagen wenn überhaupt nur schwer zugänglich sind, und deshalb auch Legionellenkolonien schwer zu entdecken sind.

Aus der GB 2 297 087 A ist eine Vorrichtung bekannt, bei der die Pflanzen auf einer organischen Vegetationsmatte gepflanzt sind. Die Vegetationsmatte besteht dabei aus einer Erdschicht, die zwischen zwei wasserdurchlässigen Deckschichten, beispielsweise aus einem Steinwollegewebe, gehalten ist. Diese sandwichartige Vegetationsmatte wird dann in einem Rahmen aufgespannt und wird von hinten bewässert.

Die FR 2 634 971 A1 beschreibt eine gattungsgemäße Vorrichtung bei der die Pflanzen auf einer organischen Vegetationsmatte gepflanzt sind. Die Vegetationsmatte besteht dabei aus einer formstabilen Vorrichtung, die mit Filz als Pflanzschicht überspannt ist.

Der vorliegenden Erfindung liegt die Aufgabe zugrunde, eine Vorrichtung für die Klimatisierung für Innenräume zur Verfügung zu stellen, die eine gesundheitlich unbedenkliche Steuerung und Beeinflussung des Raumklimas gewährleisten, und welche den menschlichen Bedürfnissen im Hinblick auf das Raumklima gerecht werden.

Diese Aufgabe wird durch eine Vorrichtung nach Anspruch 1 gelöst.

Gattungsgemäß ist eine dezentrale und biologische Klimatisierungsvorrichtung vorgesehen. Die Faktoren relative Luftfeuchte, Luftstaubreduzierung, die Lärmreduzierung (besonders der Hochtöne von elektrischen Geräten wie Rechner, Drucker, Faxe u.ä. ) sowie das psychologische Wohlbefinden werden durch diese Vorrichtung dauerhaft positiv verändert. Gattungsgemäß weist die Vorrichtung eine mit vorzugsweise niedrig wachsenden Pflanzen flächig bewurzelbare, vorzugsweise mehrschichtige Vegetationsmatte auf, welche vom Boden des Innenraums in aufragender Bauweise, d.h. in senkrechter bis nahezu senkrechter Bauweise angeordnet ist, wobei eine Bewässerungseinrichtung für eine automatisierte Versorgung der Pflanzenwurzeln in der Vegetationsmatte mit Wasser vorgesehen ist. Die bei der erfindungsgemäßen Vorrichtung von Vorteil eingesetzten Pflanzen sind im Wesentlichen niedrig wachsende Pflanzen, insbesondere Bodendecker.

Gattungsgemäß ist vorgesehen, dass die Vegetationsmatte ein anorganisches, vor der Bepflanzung steriles Material aufweist. Ein solchermaßen geeignetes anorganisches, weitgehend steriles Material ist insbesondere wichtig für die Keimfreiheit der Luftbefeuchtung durch dieses System. Bei der erfindungsgemäßen Ausbildung der Erfindung ist vorgesehen, dass die Vegetationsmatte in der Form einer ein durchwurzelbares anorganisches Material für die Pflanzen aufweisenden Wuchsschicht auf einer vom Boden des Innenraums aufragend angeordneten Trägerplatte befestigt ist.

Die Verdunstungsrate der erfindungsgemäßen Vorrichtung liegt bei 2 bis 4 l/m² in 24 Stunden (2 bis 4 Liter Feuchtigkeit pro bepflanzte Fläche innerhalb von 24 Stunden). Erfindungsgemäß ist vorgesehen, dass die Bewässcrungscinrichtung einen der Vegetationsmatte zugeordneten Feuchtigkeitssensor oder Hygrostat aufweist, der vermittels einer der Pumpe der Bewässerungseinrichtung zugeordneten Steuerschaltung selbsttätig die Wasserversorgung der Vegetationsmatte steuert. Über eine erhöhte Anzahl der Bewässerungsrythmen kann die Evaporation der Substratoberfläche vervielfacht werden, wodurch eine Anpassung der Gesamtverdunstung auf die benötigte relative Luftfeuchte erfindungsgemäß möglich wird.

Von besonderem Vorteil erfolgt die Befestigung der Vegetationsmatte auf der Trägerplatte vermittels einem Klebe-, Haft- oder Haltemittel. Das Klebe-, Haft- oder Haltemittel ist hierbei insbesondere gegenüber Wasser und Wurzelsäure fest, und sorgt für einen ausreichend sicheren Halt der Vegetationsmatte auf der Trägerplatte.

Bei einer besonders bevorzugten Ausführung der Erfindung ist die Vorrichtung als auf dem Boden des Innenraumes aufzustellendes Standgerät, und insbesondere als Raumteilungselement für eine sowohl optische als auch akustische Aufteilung des Innenraumes ausgebildet. Hierbei ist die als Standgerät bzw. Raumteiler ausgebildete Klimatisierungsvorrichtung von Vorteil auf ihren äußeren Seitenwänden vollflächig bepflanzbar, wobei die Klimatisierungsvorrichtung weiterhin eine obere äußere Seitenwand als eine die Vorrichtung nach oben abschließende Deckelwandung aufweisen kann, welche ebenfalls vollflächig bepflanzt sein kann. Die auf dem Boden des Innenraums abzustellende Klimatisierungsvorrichtung kann unterschiedliche Querschnittsformen seines Gehäuses besitzen; von Vorteil, da konstruktiv einfacher, sind rechteckige Querschnittsformen mit unterschiedlichen Breiten der Seitenwände, so dass die äussere Erscheinungsform der Klimatisierungsvorrichtung die einer aufragenden Wand oder eines aufragenden Quaders hat, denkbar sind aber auch mehreckige, rundliche oder ovale Querschnittsformen, wobei die Klimatisierungsvorrichtung in diesem Fall die äussere Erscheinungsform eines Zylinders oder Rotationsellipsoids hat. Wichtig ist in jedem Fall eine möglichst grosse äussere Fläche der Bepflanzung.

Mit der Erfindung gelingt es, eine zur Klimatisierung eines Innenraumes geeignete Vorrichtung mit Pflanzen zur Verfügung zu stellen. Die erfindungsgemäße Vorrichtung ist eine selbstständige, mit Ausnahme des Sockelteils flächig mit Pflanzen bewachsene Trennwand oder anderes geometrisches Objekt auf einem anorganischen, sterilen Trägermedium mit akustischer und visueller Trennwirkung und Wirkung auf das Raumklima. An der Oberfläche ist die erfindungsgemäße Klimatisierungsvorrichtung flächig bewachsen und durchwurzelt, wobei kein organisches Substrat verwendet wird, wie dies in herkömmlichen Begrünungen der Fall ist, sondern es wird ein anorganisches, steriles Material verwendet. Eine Belastung der Raumluft durch bodenbürtige Pilzsporen oder Bakterien (besonders Legionellen) ist aufgrund der Anordnung und Konstruktion der Erfindung mit dem in senkrechter bis nahezu senkrechter Bauweise angeordneten Vegetationsplatte sowie der Bewässerungseinrichtung für eine automatisierte und gesteuerte Versorgung der Pflanzenwurzeln mit Wasser und der Materialauswahl (insbesondere hinsichtlich der sterilen, anorganischen Materialien) ausgeschlossen.

Zur Luftbefeuchtung des Innenraumes wird die erfindungsgemäße Vorrichtung in dem Innenraum, wie beispielsweise ein Büroraum, platziert und befeuchtet darin die Luft durch Evaporation der Vegetationsmatte und Transpiration der Pflanzen. Die Luftbefeuchtung erfolgt somit über Evapotranspiration, also sowohl durch die Oberflächenverdunstung der Trägermatte, aber auch über eine Transpiration der Pflanzen, wobei dieser Anteil von der Bauart und der Pflanzenart abhängen kann. Die Transpirationsleistung der Pflanzen hängt unter anderem auch von der Beleuchtung ab, wobei für die erfindungsgemäßen Zwecke auch die in vielen Büroräumen zum Einsatz gelangende künstliche Beleuchtung ausreichend ist. Es sind somit keine zusätzlichen oder besonderen Lichtquellen erforderlich, so dass in Abhängigkeit der in den Innenräumen herrschenden Lichtverhältnisse unter Umständen geeignete Pflanzenarten gewählt werden können, so dass in den meisten Anwendungsfällen kein zusätzlicher Aufwand in Form von speziellen Leuchten geleistet werden muss.

Durch die aufragende Bauweise der erfindungsgemäßen Klimatisierungsvorrichtung können diese auch in Innenräumen mit kleineren Platzangeboten genutzt werden, und eignen sich somit auch für den Einsatz Gebäuden mit ungünstiger Raumaufteilung bzw. beschränkten Grundrissen.

Ein wesentlicher Vorteil der rein auf passiver Verdunstung arbeitenden Klimatisierungsvorrichtung besteht darin, dass die bei der Evapotranspiration entstehenden Wassertropfen so klein sind und bis zur möglichen Einatmung durch Menschen nur so kurzfristig bestehen, dass eine Verkeimung unmöglich ist. Zudem wirken die Pflanzen wie ein Filter und verhindern somit die Abgabe von Krankheitskeimen, die sich im Wasser befinden könnten. Die Verteilung der Luftfeuchte findet ohne verwirbelnde Technik statt. Dadurch ist die Gefahr einer Legionellen-Ausbreitung nach bisher bestehendem Wissensstand ausgeschlossen. Zudem wird das Wasser für die Versorgung der Pflanzen nicht erwärmt und die Vegetationsmatte trocknet mehrmals täglich oberflächig gezielt ab, um die Bildung von Amöben (Grundlagen der Legionellenbildung) oder Pilzen zu verhindern.

Ein weiterer Vorteil der erfindungsgemäßen Klimatisierungsvorrichtung ist deren geringe Anfälligkeit gegenüber technischen Störungen. Der Ausfall einer herkömmlichen Klimaanlage erfordert den Einsatz eines Spezialisten, wobei eine solche Anlage bis zur Reparatur außer Betrieb ist. Zwar kann bei der erfindungsgemäßen Vorrichtung eine Luftbefeuchtung durch Pflanzen auch gestört werden, ein Totalausfall ist jedoch nur oder bei extremen Bedingungen (mehrtägiger Ausfall der Elektrik/Bewässerung) denkbar, wobei kleinere Störungen von eingewiesenen Laien behoben werden können.

In weiterer Ausbildung der Erfindung ist vorgesehen, dass die Trägerplatte mit daran befestigter Vegetationsmatte zusätzlich durch ein Halte- und Stützgerüst abgestützt ist, und das Schutz-, Halte- und Stützgerüst vermittels einer Halterung auf einem am Boden des Innenraums abzustellenden oder an bzw. von der Zimmerdecke abzuhängenden Sockelteils abgestützt und gehalten ist. In anderen Bauweisen kann das Haltegerüst direkt durch die Trägerplatte hindurch am Traggerüst befestigt werden. Der Sockelteil weist einen Wasserbehälter zur Aufnahme von Wasser auf, wobei die Bewässerungseinrichtung zumindest eine mittels einer Pumpe mit dem Wasser gespeiste Bewässerungsleitung besitzt, welche zur Vegetationsmatte führt. Von Vorteil erfolgt die Versorgung der Pflanzenwurzeln in der Vegetationsmatte mit Wasser durch Tropfbewässerung, und überschüssiges Wasser strömt durch Schwerkraft in mit horizontaler Mattenverteilung den Wasserbehälter zurück.

In den Unteransprüchen sind weitere vorteilhafte Merkmale der Erfindung angegeben.

Weitere Zweckmäßigkeiten, Vorteile und Merkmale der Erfindung ergeben sich aus der nachfolgenden Beschreibung von Ausführungsbeispielen der Erfindung anhand der Zeichnung.

Es zeigt:
Fig. 1 eine schematische Schnittansicht eines Ausfühgrungsbeispieles der erfindungsgemäßen Klimatisierungsvorrichtung;
Fig. 2 und 3 schematische Ansichten von weiteren Ausführungsbeispielen der Erfindung mit einer wandförmigen Erscheinungsform der Klimatisierungsvorrichtung, welche als Raumteilungselement in einem Büroraum Anwendung finden; und
Fig. 4 eine schematische Darstellung eines weiteren Ausführungsbeispieles der Erfindung mit einer wandförmigen Erscheinungsform der Klimatisierungsvorrichtung, welche als Verkleidung vor einer Innenwand eines Gebäudes Anwendung findet; und
Fig. 5 eine schematische Schnittansicht eines weiteren Ausführungsbeispiels der erfindungsgemäßen Klimatisierungsvorrichtung; und
Fig. 6 eine schematische Schnittansicht eines weiteren Ausführungsbeispiels der erfindungsgemäßen Klimatisierungsvorrichtung.

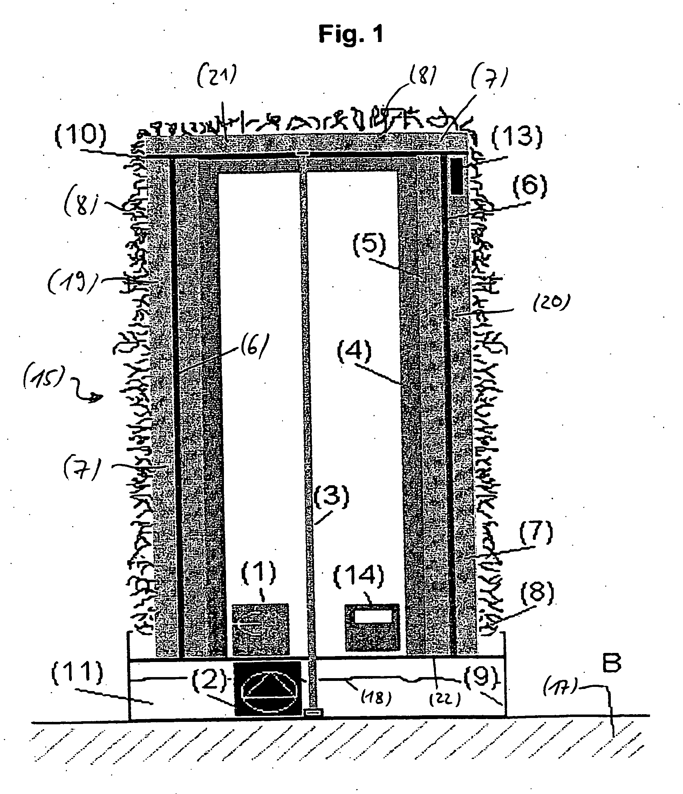

Die in den Figuren 1 bis 6 dargestellten Ausführungsbeispiele der Erfindung zeigen eine Vorrichtung 15 zur Klimatisierung eines Innenraumes 16 mit Pflanzen 8 als Klimatisierungsmedium, wobei die Vorrichtung 15 eine mit niedrig wachsenden Pflanzen flächig bewurzelbare Vegetationsmatte 7 aufweist, welche vom Boden 17 des Innenraums in aufragender Bauweise, d.h. in senkrechter oder wenigstens nahezu senkrechter Bauweise angeordnet ist, und eine Bewässerungseinrichtung mit Einzelbestandteilen 1, 2, 3, 10, 11 für eine automatisierte Versorgung der (in den Figuren nicht näher dargestellten) Pflanzenwurzeln in der Vegetationsmatte 7 mit Wasser 18 aufweist. Die Vegetationsmatte 7 weist ein anorganisches, steriles Material auf. Die Vorrichtung 15 ist als auf den Boden 17 des Innenraumes 16 aufzustellendes Standgerät, und insbesondere als Raumteilungselement für eine sowohl optische als auch akustische Aufteilung des Innenraumes 16 ausgebildet.

Die als Standgerät bzw. Raumteiler ausgebildete Klimatisierungsvorrichtung 15 ist zumindest auf ihren äußeren Seitenwänden 19, 20 vollflächig bepflanzt und weist eine obere äussere Seitenwand 21 auf, welche ebenfalls vollflächig bepflanzt ist.

Die Vegetationsmatte 7 ist in der Form einer ein durchwurzelbares anorganisches Material für die Pflanzen aufweisenden Wuchsschicht auf einer vom Boden des Innenraums aufragend angeordneten Trägerplatte 5 befestigt, wobei die Befestigung der Vegetationsmatte 7 auf der Trägerplatte vermittels einem Klebe- oder Haltemittel 6 erfolgt und die Vegetationsmatte 7 bzw. die Trägerplatte 5 mit daran befestigter Vegetationsmatte 7 durch ein Halte- und Stützgerüst 4 abgestützt ist, und das Halte- und Stützgerüst 4 vermittels einer Halterung 22 auf einem am Boden 17 des Innenraums 16 abzustellenden Sockelteils 9 abgestützt und gehalten ist.

Das Sockelteil 9 weist einen Wasserbehälter 11 zur Aufnahme von Wasser 18 auf, und die Bewässerungseinrichtung weist eine mittels einer Pumpe 2 mit dem Wasser gespeiste Bewässerungsleitung 3 auf, welche zur Vegetationsmatte 7 führt. Die Versorgung der Pflanzenwurzeln in der Vegetationsmatte 7 mit Wasser erfolgt durch Tropfbewässerung bzw. über eine Drainschicht 10 für die Wasserverteilung in der Vegetationsmatte 7, wobei überschüssiges Wasser durch Schwerkraft in den Wasserbehälter 11 zurückströmt. Die Bewässerungseinrichtung weist einen der Vegetationsmatte 7 zugeordneten Feuchtigkeitssensor oder Hygrostat 13 auf, der vermittels einer der Pumpe 2 der Bewässerungseinrichtung zugeordneten Steuerschaltung 14 selbsttätig die Wasserversorgung der Vegetationsmatte 7 steuert.

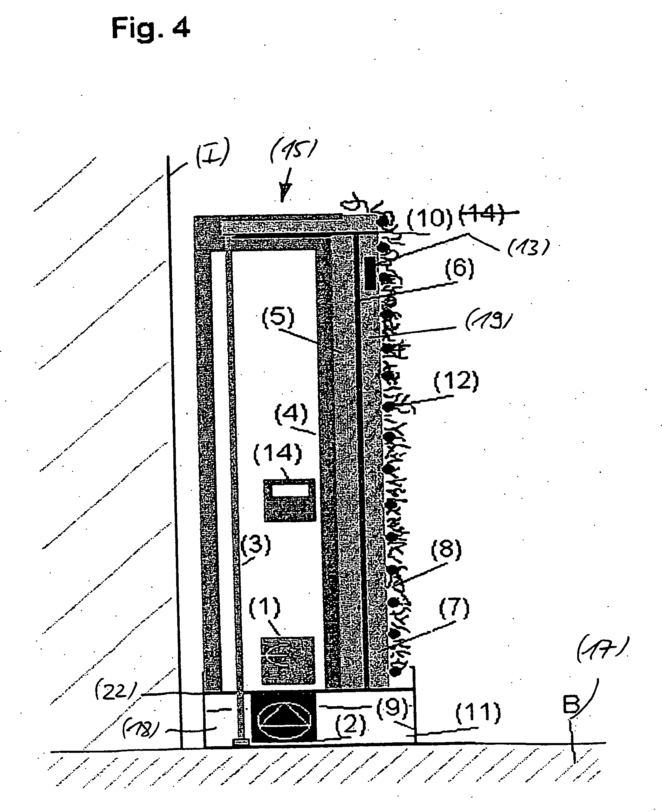

Insbesondere bei höheren Bauweisen der Vorrichtung 15 kann die Vegetationsmatte 7 zur Verstärkung gegenüber mechanischen Belastungen oder aufgrund von außen einwirkenden Kräften bereits vor der Durchwurzelung mit einem Schutzgitter 12 versehen sein, das über Schraubhaken oder ähnlichen Befestigungsmitteln mit der Trägerplatte 5 verbunden ist und vollkommen überwächst. Das Schutzgitter 12 ist lediglich bei der in Figur 4 dargestellten Ausführung gezeigt, kann aber auch bei den anderen Ausführungsbeispielen vorgesehen sein.

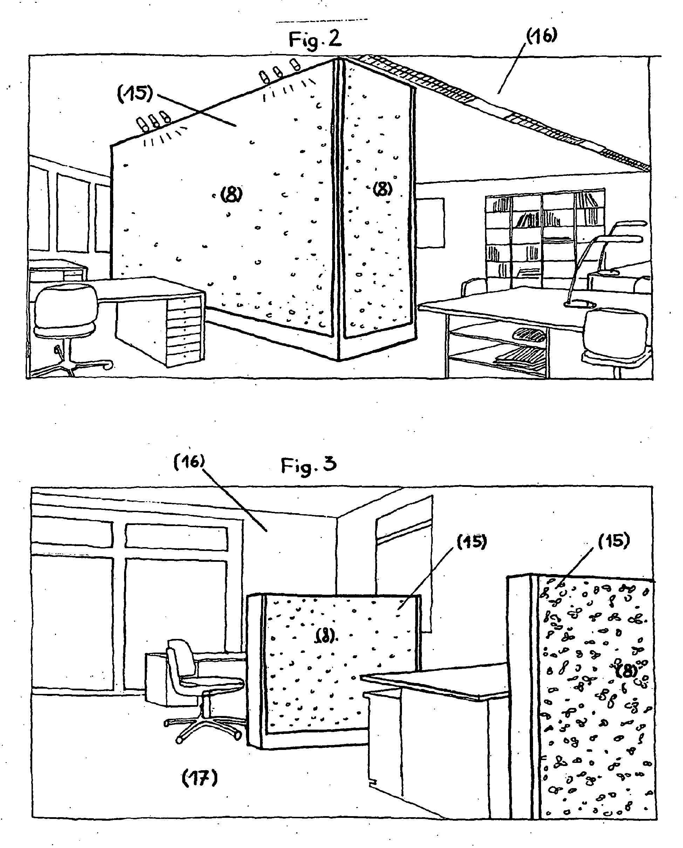

In den Figuren 1 bis 5 sind unterschiedliche Ausführungen bzw. Anwendungen der Erfindung dargestellt, wobei sich identische Bezugsziffern auf identische Merkmale beziehen. Das in Fig. 1 in schematischer Schnittansicht dargestellte Ausführungsbeispiel der erfindungsgemäßen Klimatisierungsvorrichtung hat eine auf den Außenwänden ganzflächig und allseitig bewachsene Bepflanzung, und eignet sich als Raumteilungselement in einem Büroraum. Die in Fig. 2 und 3 gezeigten Ausführungsbeispiele der Erfindung haben ebenfalls eine wandförmige Erscheinungsform der Klimatisierungsvorrichtung, und finden ebenso als Raumteilungselemente in einem Büroraum Anwendung. Das in Fig. 4 schematisch dargestellte Ausführungsbeispiel der Erfindung hat eine wandförmige Erscheinungsform der Klimatisierungsvorrichtung mit einer nur auf einer Außenwand vorgesehenen Bepflanzung 8, und kann daher als Verkleidung vor einer Innenwand I eines Gebäudes Anwendung finden.

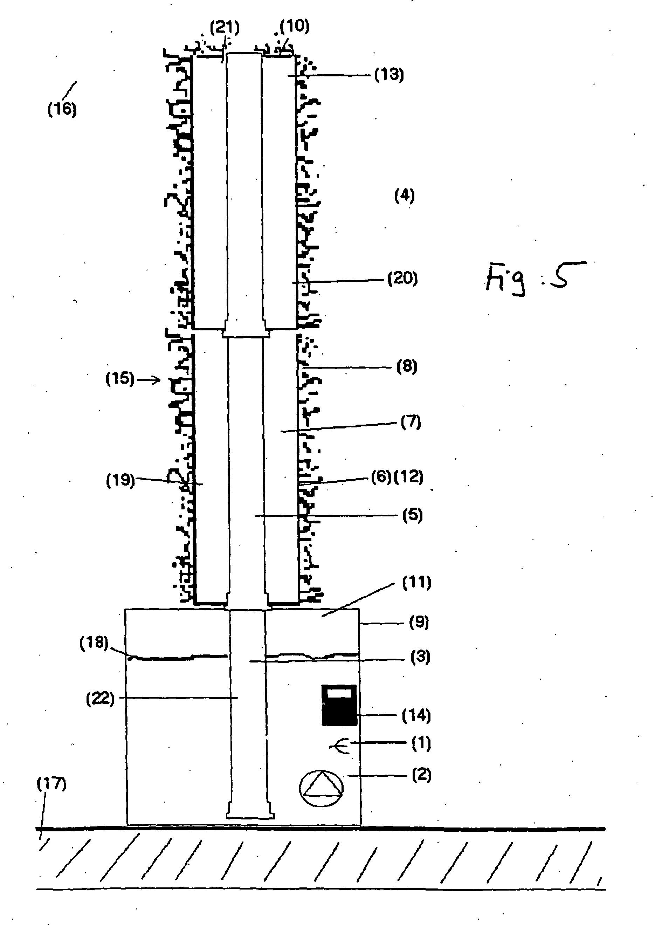

Bei dem in Fig. 5 dargestellten Ausführungsbeispiel umfasst die Stützvorrichtung ein oder mehrere vorzugsweise aus Kunststoffmaterial gefertigte Stützrohre 5, dessen jeweils unteres Ende zu einem Flanschstück 5a ausgeformt ist, dergestalt, dass die Stützrohre aufeinander gesetzt werden können. Auf diese Weise ist durch Aufeinandersetzen mehrerer Klimatisierungsvorrichtungen eine beliebige Bauhöhe einer erfindungsgemäßen Klimatisierungsvorrichtung bestehend aus mehreren gleichartig ausgebildeten modularen Bausteinen montierbar.

Bei größeren Bauhöhen müsste selbstverständlich die Pumpenleistung des Fördermittels 2 angepasst werden. Im Übrigen entspricht die in Fig. 5 dargestellte Ausführungsform der in den Fig. 1 bis 4 dargestellten Ausführungsbeispielen.

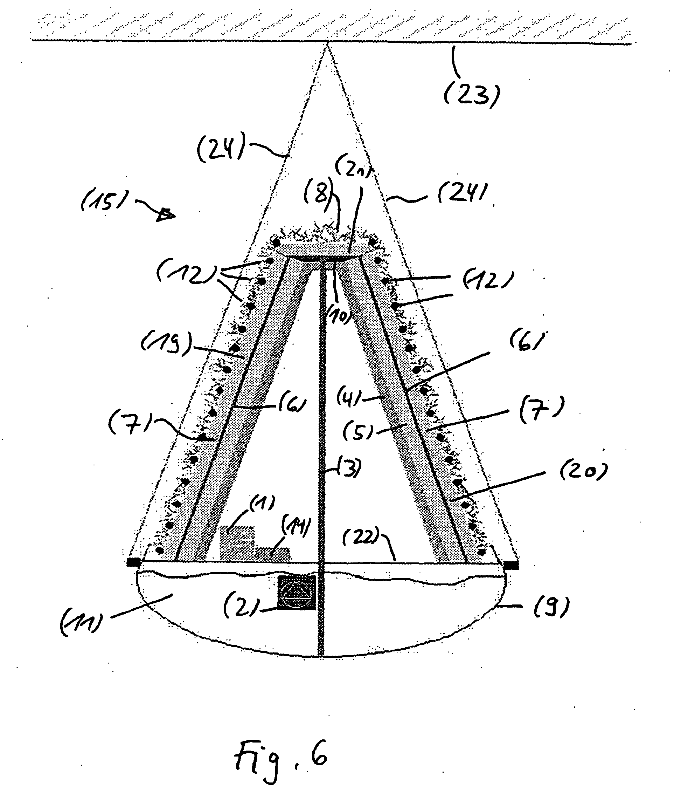

Bei dem in Fig. 6 dargestellten Ausführungsbeispiels ist die erfindungsgemäße Klimatisierungsvorrichtung nicht als Standgerät, sondern als an einer Zimmerdecke 23 vermittels Seilen 24 aufzuhängenden Geräts ausgebildet. Bei dieser Ausführungsform kann die in aufragender Bauweise angeordnete, flächig bewurzelbare Vegetationsmatte 7 von der senkrechten Richtung geringfügig abweichend ausgebildet sein, wie es in Fig. 6 dargestellt ist. Im Übrigen entspricht die in Fig. 6 dargestellte Ausführungsform der in den Fig. 1 bis 4 dargestellten Ausführungsbeispielen.

## Patentansprüche

1. Vorrichtung zur Klimatisierung eines Innenraumes (16) mit Pflanzen (8) als Klimatisierungsmedium, wobei die Vorrichtung (15) eine mit insbesondere niedrig wachsenden Pflanzen (8) flächig bewurzelbare Vegetationsmatte (7) aufweist, welche vom Boden (B) des Innenraums (16) in aufragender Bauweise, d.h. in senkrechter oder wenigstens nahezu senkrechter Bauweise angeordnet ist, und eine Bewässerungseinrichtung für eine automatisierte Versorgung der Pflanzenwurzeln in der Vegetationsmatte (7) mit Wasser aufweist,
wobei die Vegetationsmatte (7) aus einem anorganischen, sterilen Material besteht und kein organisches Substrat enthält, wobei die Vegetationsmatte (7) in der Form einer ein durchwurzelbares anorganisches Material für die Pflanzen aufweisenden Wuchsschicht auf einer vom Boden (B) des Innenraums (16) aufragend angeordneten Trägerplatte (5) befestigt ist
**dadurch gekennzeichnet,**
**dass** die Verdunstungsrate der Vorrichtung bei 2 bis 4 l/m² in 24 Stunden liegt, wobei die Bewässerungseinrichtung einen der Vegetationsmatte zugeordneten Feuchtigkeitssensor oder Hygrostat (13) aufweist, der vermittels einer der Pumpe der Bewässerungseinrichtung zugeordneten Steuerschaltung selbsttätig die Wasserversorgung der Vegetationsmatte steuern kann, und wobei zur Anpassung der Gesamtverdunstung der Vorrichtung die Anzahl der Bewässerungsrythmen automatisiert angepasst werden kann.

2. Vorrichtung nach Anspruch 1,
**dadurch gekennzeichnet,**
**dass** die Vegetationsmatte (7) aus mehreren Schichten besteht.

3. Vorrichtung nach Anspruch 1 oder 2,
**dadurch gekennzeichnet,**
**dass** die Vegetationsmatte (7) bzw. die Trägerplatte (5) mit daran befestigter Vegetationsmatte (7) durch ein Halte- und Stützgerüst (4) abgestützt ist, und das Halte- und Stützgerüst (4) vermittels einer Halterung (22) auf einem am Boden (B) des Innenraums (16) abzustellenden Sockelteil (9) abgestützt und gehalten ist, wobei das Sockelteil (9) einen Wasserbehälter (11) zur Aufnahme von Wasser aufweist, und die Bewässerungseinrichtung eine mittels einer Pumpe (2) mit dem Wasser gespeiste Bewässerungsleitung (3) aufweist, welche über eine Wasserverteilung (10) zur Vegetationsmatte (7) führt.

## Claims

1. Device for air-conditioning an interior room (16) using plants (8) as an air-conditioning medium, wherein the device (15) features a vegetation mat (7), on which in particular low-growing plants (8) can take root over the entire surface thereof, the vegetation mat being designed so as to extend upwardly, i.e. in a vertical or at least substantially vertical manner, from the bottom (B) of the interior room (16), and wherein the device features a watering device for an automated supply of the plant roots in the vegetation mat (7) with water,
wherein the vegetation mat (7) is composed of an inorganic sterile material and does not contain an organic substrate, wherein the vegetation mat (7) is attached on a carrier plate (5) which is disposed so as to extend upwardly from the bottom (B) of the interior room (16) in the form of a growth layer containing an inorganic material permitting root growth of the plants,
**characterized in that**
the evaporation rate of the device is 2 to 4 l/m² in a period of 24 hours, wherein the watering device features a humidity sensor or a hygrostat (13), which is assigned to the vegetation mat and which can control the water supply of the vegetation mat in an automated manner by means of a control circuit which is assigned to the pump of the watering device, and wherein the number of the watering cycles can be automatically adapted for the adjustment of the overall evaporation rate of the device.

2. Device according to claim 1,
**characterized in that**
the vegetation mat (7) is composed of several layers.

3. Device according to claim 1 or 2,
**characterized in that**
the vegetation mat (7) or the carrier plate (5), which has the vegetation mat (7) attached thereto, is supported by a holding and supporting frame (4), and the holding and supporting frame (4) is supported and held with the aid of a retainer (22) on a base part (9) to be deposited on the bottom (B) of the interior room (16), wherein the base part (9) has a water container (11) for the reception of water, and the watering device has a watering line (3) which is supplied with the water by means of a pump (2) and which leads to the vegetation mat (7) via a water distribution means (10).

## Revendications

1. Dispositif pour le conditionnement d'air dans une pièce intérieure (16) en utilisant des plantes (8) en tant que médium de conditionnement d'air, le dispositif (15) présentant une natte de végétation (7), dans laquelle en particulier des plantes basses (8) peuvent s'enraciner sur la surface entière de celle-ci, la natte de végétation étant façonnée de telle sorte qu'elle s'étende en haut, soit de manière verticale ou au moins sensiblement verticale, à partir du fond (B) de la pièce intérieure (16), et le dispositif présentant un dispositif d'arrosage pour une alimentation en eau automatisée des racines des plantes dans la natte de végétation (7),
dans lequel la natte de végétation (7) est composée d'un matériau inorganique stérile and ne contient aucun substrat organique, la natte de végétation (7) étant fixée sur une plaque de support (5) qui est disposée de façon à s'étendre en haut à partir du fond (B) de la pièce intérieure (16) en forme d'une couche de croissance qui contient un matériau inorganique permettant aux plantes de s'enraciner,
**caractérisé en ce que**
le taux d'évaporation du dispositif est de 3 à 4 l/m² dans une période de 24 heurs, le dispositif d'arrosage présentant un capteur d'humidité ou un hygrostat (13) qui est assigné à la natte de végétation et qui peut commander l'alimentation en eau de la natte de végétation de manière automatique à l'aide d'un circuit de commande qui est assigné à la pompe du dispositif d'arrosage, et le nombre des cycles d'arrosage pouvant être adapté de façon automatique en vue de l'ajustement du taux d'évaporation totale du dispositif.

2. Dispositif selon la revendication 1,
**caractérisé en ce que**
la natte de végétation (7) est composée de plusieurs couches.

3. Dispositif selon la revendication 1 ou 2,
**caractérisé en ce que**
la natte de végétation, ou bien la plaque de support (5) qui a la natte de végétation (7) fixée à elle-même, est supportée au moyen d'un cadre de retenue et de support (4), et le cadre de retenue et de support (4) est supporté et tenu à l'aide d'un support (22) sur une partie de base (9) à déposer sur le fond (B) de la pièce intérieure (16), la partie de base (9) présentant un réservoir d'eau (11) pour la réception d'eau, et le dispositif d'arrosage présentant une conduite d'arrosage (3) qui est alimentée en eau au moyen d'une pompe (2) et qui mène à la natte de végétation (7) à travers un moyen de distribution d'eau.
